# FASCICULE DE BREVET EUROPEEN

(11) **EP 1 187 126 B1**
(45) Date de publication et mention de la délivrance du brevet: **10.01.2007**
(21) Numéro de dépôt: 01203318.9
(22) Date de dépôt: 03.09.2001
(51) Int. Cl.: G11B 19/22, G11B 19/20, G11B 21/12

(54) **Dispositif de commande d'un moteur permettant la mesure de la vitesse de rotation de son rotor**
Motorsteuervorrichtung, die eine Messung der Umdrehungsgeschwindigkeit des Rotors erlaubt
Motor control device allowing measurement of the speed of rotation of the rotor

(30) Priorité: 12.09.2000 FR 0011589
(43) Date de publication de la demande: 13.03.2002
(73) Titulaire: Koninklijke Philips Electronics N.V., 5621 BA Eindhoven (NL)
(72) Inventeur: Van der Linde, J.P., 75008 Paris (FR); Van Hout, H., 75008 Paris (FR)
(74) Mandataire: van Oudheusden-Perset, Laure E.

(56) Documents cités:
- WO-A-00/36604
- WO-A-00/51118
- US-A- 4 679 102
- US-A- 5 521 476
- PATENT ABSTRACTS OF JAPAN vol. 1997, no. 12, 25 décembre 1997 (1997-12-25) & JP 09 213035 A (MATSUSHITA ELECTRIC IND CO LTD), 15 août 1997 (1997-08-15)

## Description

La présente invention concerne un dispositif de contrôle d'un moteur comprenant un rotor muni d'un enroulement et un stator, dispositif incluant des moyens de contrôle permettant de gérer l'alimentation de l'enroulement, des moyens de mesure de la valeur d'une force contre-électromotrice induite dans ledit enroulement par le mouvement du rotor lorsque l'alimentation de l'enroulement est interrompue, des moyens de comparaison destinés à fournir un signal de consigne représentatif d'une comparaison entre la valeur d'une tension de référence et la valeur de la force contre-électromotrice fournie par les moyens de mesure, les moyens de contrôle étant pilotés par le signal de consigne.

Un appareil mettant en oeuvre un tel dispositif est décrit dans la demande de brevet européen EP 0 859 456 A1. Cet appareil comporte un bras muni d'une tête de lecture/écriture d'informations destiné à être mis en mouvement par le moteur évoqué ci-dessus, et un deuxième moteur, dit moteur de disque, destiné à entraîner en rotation un disque dont la surface est porteuse d'informations, par exemple un disque dur magnétique pour équipements informatiques. Chaque moteur est muni de bornes d'entrée, dites bornes d'alimentation, qui sont reliées à un ou plusieurs enroulements destinés à produire un champ magnétique permettant la mise en rotation de son rotor. Chacune des bornes d'alimentation est reliée à un circuit d'alimentation destiné à assurer l'alimentation en énergie de l'enroulement en régime de fonctionnement normal de l'appareil. Lorsque survient une brusque coupure d'alimentation de l'appareil, le rotor du deuxième moteur, entraîné par l'énergie cinétique du disque, continue à tourner et produit une force contre-électromotrice à ses bornes d'alimentation, le deuxième moteur fonctionnant alors en génératrice. Cette force contre-électromotrice, substituée à la tension d'alimentation du moteur de bras pendant une phase dite de retrait d'urgence, doit permettre audit moteur de déplacer le bras vers une zone de repos qui est aménagée pour que le bras puisse s'y poser sans provoquer de dommages à la tête de lecture/écriture.

Dans l'appareil connu, la valeur de la tension appliquée à l'enroulement du moteur de bras n'est pas contrôlée pendant la phase de retrait d'urgence, puisqu'elle est appelée à varier en fonction de la vitesse de rotation du disque. Ceci implique que la vitesse du bras n'est pas non plus maîtrisée.

Le bras risque donc d'être acheminé vers la zone de repos à une vitesse élevée, ce qui peut provoquer un choc sur une butée destinée à maintenir le bras en position de repos, choc qui peut résulter en un rebond du bras vers le disque avec pour conséquence un contact violent entre la tête de lecture et le disque pouvant endommager les deux éléments.

Inversement, si la vitesse du bras est trop faible durant la phase de retrait d'urgence, le bras peut ne pas avoir le temps d'achever son mouvement vers la zone de repos avant que la force contre-électromotrice générée par le deuxième moteur ne disparaisse à la suite de l'arrêt de la rotation du disque, qui se produira inévitablement lorsque son énergie cinétique sera entièrement dissipée. La tête de lecture/écriture atterrira alors sur le disque plutôt que sur la zone de repos, ce qui risque d'endommager la tête et le disque.

L'invention a pour but de remédier à ces inconvénients en proposant un dispositif de contrôle dans lequel la vitesse du bras peut être mesurée

En effet, selon l'invention, un dispositif de contrôle conforme au paragraphe introductif inclut en outre des moyens de référence pour faire varier la valeur de la tension de référence de façon monotone au cours du temps.

Dans ce dispositif de contrôle, la force contre-électromotrice générée par le rotor du moteur du bras est mesurée pendant un bref intervalle de temps au cours duquel l'enroulement n'est pas alimenté. Pendant cet intervalle de temps, la vitesse du bras est donc constante et proportionnelle à la force contre-électromotrice dont la valeur est mesurée. La valeur mesurée par les moyens de mesure est alors représentative de la vitesse du bras.

La valeur de la vitesse du bras étant rendue accessible grâce à l'invention, il est possible de la contrôler afin d'assurer que le déplacement du bras vers la zone de repos se fasse dans les meilleures conditions possibles.

A cet effet, l'invention permet de mesurer la vitesse du bras à différents instants de sa course vers la zone de repos, de comparer les valeurs ainsi mesurées avec des valeurs prédéterminées correspondant à une course optimale, et de réguler la vitesse réelle du bras afin de rendre sa course conforme à la course optimale.

Dans un mode de réalisation particulier de l'invention, les moyens de contrôle incluent un transistor dont le trajet principal de courant est disposé entre une source de tension et une borne de l'enroulement du rotor, la conduction dudit transistor étant contrôlée par le signal de consigne.

Ce mode de réalisation est avantageux en ce qu'il prévoit un circuit d'alimentation spécifique de l'enroulement du moteur du bras, activé pendant la phase de retrait d'urgence et séparé du circuit qui assure l'alimentation dudit enroulement en régime de fonctionnement normal. Le circuit d'alimentation spécifique étant piloté par le signal de consigne, la régulation de la vitesse du bras est opérée simplement et quasi-instantanément.

Ainsi l'invention permet une réduction continue et contrôlée de la vitesse du bras, de sorte que celui-ci parvienne à la zone de repos à une vitesse suffisamment faible pour éviter tout rebond.

Conformément à ce qui a été exposé précédemment, l'invention concerne également, dans une de ses applications, un appareil permettant l'écriture d'informations sur la surface d'un support prévu à cet effet, et leur lecture par l'entremise d'une tête de lecture/écriture portée par un bras destiné à être mis en mouvement par rapport audit support au moyen d'un premier moteur, ledit support étant destiné à être mis en mouvement au moyen d'un deuxième moteur,
appareil caractérisé en ce que le premier moteur est piloté au moyen d'un dispositif de contrôle tel que décrit plus haut.

L'invention sera mieux comprise à l'aide de la description suivante, faite à titre d'exemple non-limitatif et en regard des dessins annexés, dans lesquels :
- la figure 1 est un schéma fonctionnel partiel décrivant un dispositif de contrôle selon l'invention,
- la figure 2 est un schéma électrique décrivant les caractéristiques électriques d'un moteur de bras,
- la figure 3 est un schéma fonctionnel décrivant des moyens de mesure selon un mode de réalisation particulier de l'invention,
- la figure 4 est un schéma fonctionnel décrivant des moyens de contrôle et de comparaison selon un mode de réalisation particulier de l'invention, et
- la figure 5 est une représentation schématique d'un appareil mettant en oeuvre l'invention.

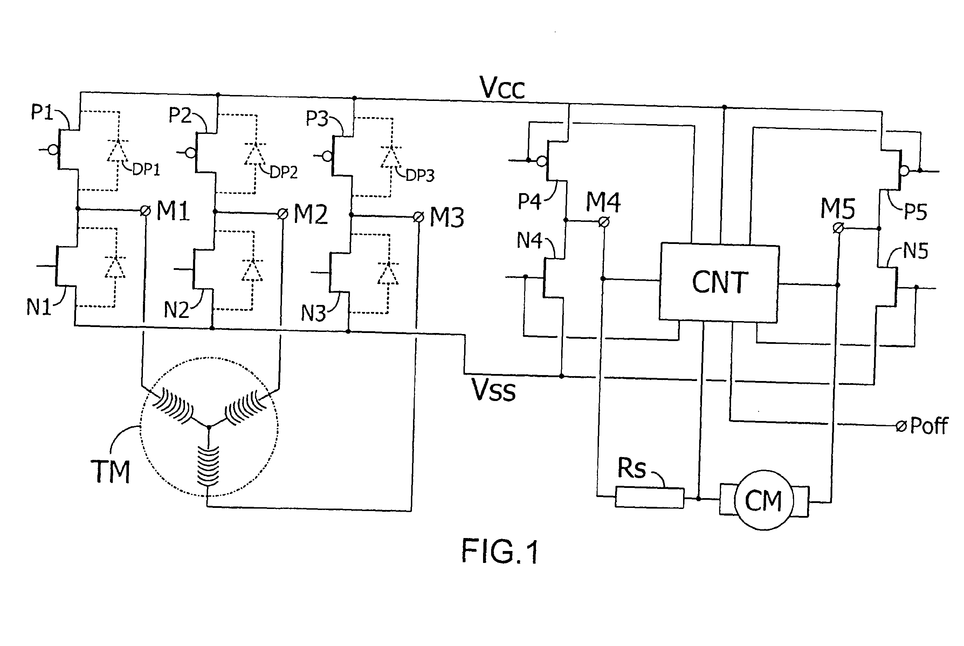

La figure 1 représente schématiquement un dispositif de contrôle d'un premier moteur CM à courant continu, destiné à entraîner en imprimant à un bras muni d'une tête de lecture/écriture d'informations un mouvement par rapport à un disque porteur d'informations entraîné en rotation par un deuxième moteur TM triphasé. Les premier et deuxième moteurs CM et TM sont munis de bornes d'entrée (M4, M5) et (M1, M2, M3). Chaque borne d'alimentation Mi est reliée à un enroulement du moteur correspondant, enroulement destiné à produire un champ magnétique permettant la mise en rotation du rotor du moteur considéré. Chacune des bornes d'alimentation Mi (pour i=1 à 5) est reliée à un circuit d'alimentation, constitué par des transistors de puissance complémentaires (Pi, Ni) destinés à être activés alternativement afin d'assurer l'alimentation en énergie de l'enroulement en régime de fonctionnement normal. Le circuit d'alimentation du premier moteur CM comporte dans cet exemple une résistance de mesure Rs, disposée entre la borne d'alimentation M4 et l'enroulement du premier moteur CM. Le rôle de cette résistance de mesure Rs sera expliqué dans la suite de l'exposé.

Lorsque survient une brusque coupure d'alimentation, le rotor du deuxième moteur TM, entraîné par son énergie cinétique et celle du disque dont il est solidaire, continue à tourner et produit une force contre-électromotrice à ses bornes d'alimentation (M1, M2, M3), le deuxième moteur fonctionnant alors en génératrice. Cette force contre-électromotrice, peut être substituée à la tension d'alimentation VCC du premier moteur CM pendant une phase dite de retrait d'urgence, au cours de laquelle le premier moteur CM peut prélever depuis le deuxième moteur TM un courant par l'intermédiaire de diodes DP1, DP2 ou DP3, qui sont le plus souvent des diodes parasites présentes dans les transistors de puissance P1, P2 et P3. Ceci permet au premier moteur CM de déplacer le bras vers une zone de repos qui est aménagée pour que le bras puisse s'y poser sans provoquer de dommages à la tête de lecture/écriture. Le dispositif de contrôle représenté ici inclut :
. des moyens de contrôle permettant de gérer l'alimentation de l'enroulement du rotor, et
. des moyens de mesure de la valeur d'une force contre-électromotrice induite dans ledit enroulement par le mouvement du rotor lorsque l'alimentation de l'enroulement du rotor est interrompue.
Les moyens de mesure et de contrôle sont intégrés au sein d'un module de contrôle CNT. Selon l'invention, la force contre-électromotrice générée par le rotor du premier moteur CM est mesurée pendant un bref intervalle de temps au cours duquel l'enroulement dudit moteur n'est pas alimenté.
Pendant cet intervalle de temps, un signal Poff ordonne au module de contrôle CNT de rendre conducteurs les transistors N4 et N5 et de bloquer les transistors P4 et P5. La vitesse du bras sera alors constante et proportionnelle à la force contre-électromotrice dont la valeur est mesurée. La valeur mesurée par les moyens de mesure est ainsi représentative de la vitesse du bras.

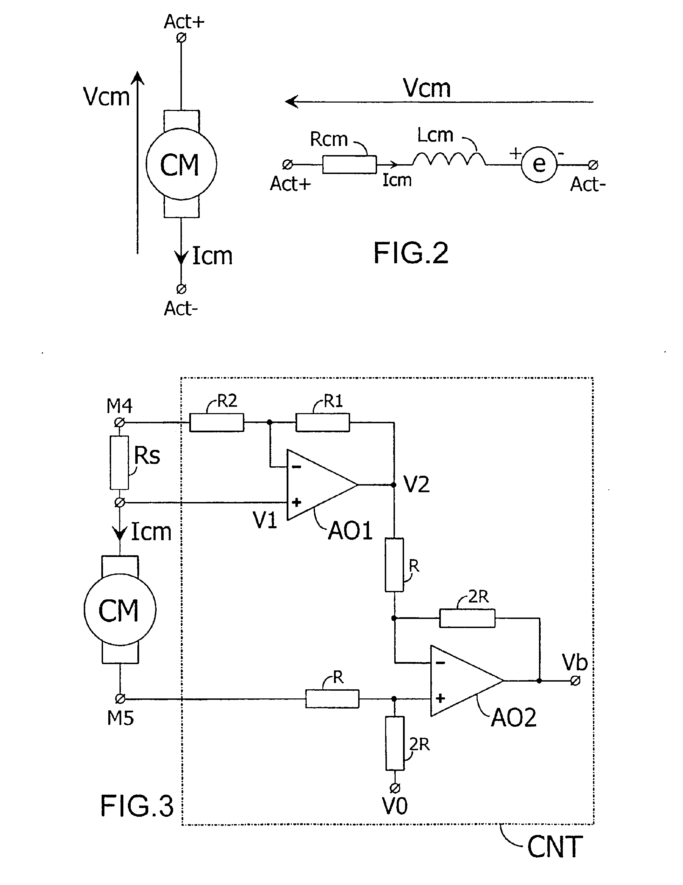

La figure 2 présente un schéma équivalent du premier moteur CM lorsque celui-ci fonctionne en génératrice, c'est-à-dire pendant que l'alimentation en énergie de l'enroulement est interrompue, alors que la rotation du rotor continue du fait de son énergie cinétique, le rotor étant placé dans un champ magnétique permanent généré par des aimants solidaires du stator. Ce moteur comporte un enroulement présentant deux bornes Act+ et Act-, entre lesquelles l'enroulement génère une tension Vcm et est parcouru par un courant Icm. Le moteur CM est alors équivalent à un assemblage en série d'une résistance Rcm correspondant à la résistance de l'enroulement, d'une inductance Lcm correspondant à l'inductance de l'enroulement, et d'un générateur de tension e correspondant à la force contre-électromotrice générée par le mouvement du rotor placé dans un champ magnétique. Lorsque le courant Icm est constant, la force contre-électromotrice e s'exprime sous la forme e=Vcm-(Rcm.Icm).

La figure 3 présente un mode de réalisation des moyens de mesure de la force contre-électromotrice induite dans l'enroulement du moteur CM lorsque l'alimentation en énergie dudit enroulement est interrompue. Ces moyens de mesure sont inclus dans le module de contrôle CNT et comportent un premier et un deuxième amplificateur opérationnel AO1 et AO2. Si l'on note V1 le potentiel d'une borne intermédiaire entre la résistance de mesure Rs et le moteur CM, le premier amplificateur opérationnel, monté en inverseur, délivre un signal V2 qui peut s'exprimer sous la forme V2=V1-(Rs.Icm.R1/R2).
Le deuxième amplificateur opérationnel, monté en soustracteur, délivre un signal Vb qui peut s'exprimer sous la forme Vb=2.[V(M5)-V2]+V0.
Si l'on considère que V(M5)-V1=-Vcm, selon les notations de la figure 2, et si l'on choisit Rs.R1/R2=Rcm, on obtient Vb=-2.[Vcm-(Rcm.Icm)]+V0, soit encore Vb=-2.e+V0.
Le signal fourni par le deuxième amplificateur opérationnel AO2 est ainsi représentatif de la force contre-électromotrice induite dans l'enroulement du moteur CM. Les moyens de mesure permettent donc de connaître la vitesse de rotation du rotor dudit moteur CM lorsque son alimentation en énergie est interrompue.

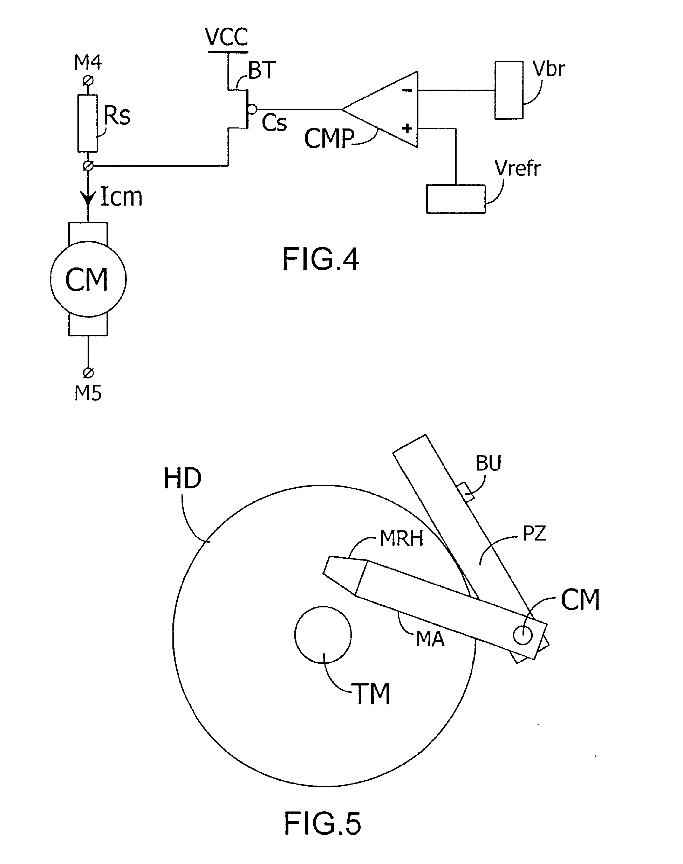

La figure 4 représente un mode de réalisation des moyens de contrôle, qui incluent des moyens de comparaison destinés à fournir un signal de consigne Cs représentatif d'une comparaison entre une valeur de référence, mémorisée ici dans un registre Vrefr, et celle du signal fourni par les moyens de mesure, représentatif de la vitesse de rotation du rotor du premier moteur, mémorisée ici dans un registre Vbr. Les moyens de comparaison seront constitués dans cet exemple par un comparateur numérique CMP.
Dans d'autres modes de réalisation, on pourra choisir d'utiliser un comparateur analogique recevant directement le signal fourni par les moyens de mesure et un signal de référence analogique. Le signal de consigne contrôle la conduction d'un transistor BT dont le trajet principal de courant est disposé entre la borne d'alimentation VCC et l'enroulement du premier moteur CM. Compte tenu du fait que Vb=-2.[Vcm-(Rcm.Icm)]+V0, la valeur du signal de consigne Cs est positive tant que la vitesse de rotation du disque est inférieure à la valeur définie par le biais de la valeur de référence. Le transistor BT est alors conducteur et alimente en énergie l'enroulement du moteur CM de façon à augmenter la vitesse de rotation de celui-ci. Lorsque la vitesse de rotation du disque est supérieure à la valeur définie par le biais de la valeur de référence, le signal de consigne Cs devient négatif, ce qui interrompt la conduction du transistor BT et l'alimentation en énergie de l'enroulement du moteur CM, avec pour conséquence une diminution de la vitesse de rotation de celui-ci.
Des moyens non-représentés sur la figure, par exemple un interrupteur commandé par le signal Poff, permettront le blocage du transistor BT pendant l'intervalle de temps nécessaire à la mesure de la vitesse de rotation du moteur CM.
L'invention permet donc de mesurer la vitesse du bras mû par le moteur CM à différents instants de sa course vers la zone de repos, de comparer les valeurs ainsi mesurées avec des valeurs prédéterminées correspondant à une course optimale, en modifiant par voie logicielle le contenu du registre Vrefr, et de réguler la vitesse réelle du bras afin de rendre sa course conforme à la course optimale.
En particulier, si le contenu du registre Vrefr est programmé de sorte que la valeur de référence varie de façon monotone, de sorte qu'elle soit par exemple continûment décroissante au cours du temps, la vitesse du bras pourra être continûment réduite de sorte que le bras parvienne à la zone de repos à une vitesse quasi nulle.

La figure 5 représente schématiquement un appareil destiné au stockage d'informations dans lequel l'invention sera avantageusement mise en oeuvre. Cet appareil comporte un bras MA muni d'une tête de lecture/écriture d'informations MRH, lequel bras MA est destiné à être mis en mouvement au moyen d'un premier moteur CM par rapport à une surface porteuse d'informations, ici un disque dur HD. Un deuxième moteur TM est destiné à entraîner en rotation le disque HD.
Lorsque survient une brusque coupure d'alimentation de l'appareil, le rotor du deuxième moteur TM, entraîné par l'énergie cinétique du disque HD, continue à tourner et produit une force contre-électromotrice à ses bornes d'alimentation, le deuxième moteur TM fonctionnant alors en génératrice. Cette force contre-électromotrice, substituée à la tension d'alimentation du premier moteur CM pendant une phase dite de retrait d'urgence, doit permettre audit moteur CM de déplacer le bras MA vers une zone de repos PZ qui est aménagée pour que le bras MA puisse s'y poser sans provoquer de dommages à la tête de lecture/écriture MRH. Dans l'exemple représenté ici, la zone de repos est située à l'extérieur du disque. Dans d'autres applications, la zone de repos pourra être aménagée sur le disque HD lui-même.
L'invention permet une mesure et une régulation de la vitesse angulaire du bras MA, afin d'assurer que ledit bras MA ait une vitesse suffisante pour parvenir jusqu'à la zone de repos PZ, la vitesse du bras MA en fin de course étant cependant suffisamment faible pour que le bras MA ne rebondisse pas sur une butée BU destinée à maintenir le bras MA en position sur la zone de repos PZ.

## Revendications

1. Dispositif de contrôle d'un moteur (CM) comprenant un rotor muni d'un enroulement et un stator, dispositif incluant :
- des moyens de contrôle (CNT) permettant de gérer l'alimentation de l'enroulement,
- des moyens de mesure (AO1, AO2) de la valeur d'une force contre-électromotrice (Vb) induite dans ledit enroulement par le mouvement du rotor lorsque l'alimentation de l'enroulement est interrompue,
- des moyens de comparaison (CMP) destinés à fournir un signal de consigne représentatif d'une comparaison entre la valeur d'une tension de référence (Vrefr) et la valeur de la force contre-électromotrice (Vb) fournie par les moyens de mesure, les moyens de contrôle étant pilotés par le signal de consigne,
**caractérisé en ce** qu"il inclut en outre des moyens de référence pour faire varier la valeur de la tension de reference (Vrefr) de façon monotone au cours du temps.

2. Dispositif de contrôle d'un moteur suivant la revendication 1, dans lequel les moyens de contrôle incluent un transistor (BT) dont le trajet principal de courant est disposé entre une source de tension et une borne de l'enroulement du rotor, la conduction dudit transistor étant contrôlée par le signal de consigne,

3. Appareil permettant l'écriture d'informations sur la surface d'un support (HD) prévu à cet effet, et leur lecture par l'entremise d'une tête de lecture/écriture (MRHD) portée par un bras (MA) destiné à être mis en mouvement par rapport audit support au moyen d'un premier moteur (CM), ledit support étant destiné à être mis en mouvement au moyen d'un deuxième moteur (TM), appareil **caractérisé en ce que** le premier moteur est piloté au moyen d'un dispositif de contrôle conforme à la revendication 1.

## Claims

1. A device for controlling a motor (CM) comprising a rotor provided with a winding and a stator, which device comprises:
- control means (CNT) which make it possible to manage the power supply of the winding,
- measuring means (AO1, A02) for measuring the value of a counter-electromotive force (Vb) induced into said winding by the movement of the rotor when the power supply of the winding is interrupted,
- comparison means (CMP) intended to supply a command signal that is representative of a comparison between the value of a reference voltage (Vrefr) and the value of the counter-electromotive force (Vb) supplied by the measuring means, the control means being regulated by the command signal,
- **characterized in that** it additionally comprises reference means for making the reference voltage (Vrefr) vary monotonically in the course of time.

2. A device for controlling a motor as claimed in claim 1, wherein the control means comprise a transistor (BT) whose main current path extends between a voltage source and a terminal of the winding of the rotor, the conduction of said transistor being controlled by the command signal.

3. An apparatus enabling information to be written on the surface of a carrier (HD) provided for this purpose, and enabling said information to be read using a read/write head (MRHD) which is carried by an arm (MA), which arm is intended to be made to move with respect to this carrier by means of a first motor (CM), said carrier being intended to be made to move by means of a second motor (TM), which apparatus is **characterized in that** the first motor is regulated by means of a control device as claimed in claim 1.

## Patentansprüche

1. Steuervorrichtung eines Motors (CM) mit einem mit einer Wicklung versehenen Rotor und einem Stator, wobei die Vorrichtung versehen ist mit:
- Steuermitteln (CNT) für die Versorgung der Wicklung,
- Messmitteln (AO1, A02) des Werts einer gegenelektromotorischen Kraft (Vb), induziert in der besagten Wicklung durch die Bewegung des Rotors, wenn die Versorgung der Wicklung unterbrochen ist,
- Vergleichsmitteln (CMP) für die Ausgabe eines Anweisungssignals, repräsentativ für den Vergleich des Werts einer Referenzspannung (Vrefr) mit dem Wert der gegenelektromotorischen Kraft (Vb), ausgegeben von den Messmitteln, wobei die Steuermittel von dem Anweisungssignal gesteuert werden,
**dadurch gekennzeichnet, dass** sie außerdem Referenzmittel enthält, um den Wert der Referenzspannung (Vrefr) im Zeitverlauf gleichförmig variieren zu lassen.

2. Steuervorrichtung eines Motors gemäß Anspruch 1, in dem die Steuermittel einen Transistor (BT) enthalten, dessen Hauptstromweg zwischen einer Spannungsquelle und einer Klemme der Wicklung des Rotors angeordnet ist, wobei die Leitung des besagten Transistors von dem Anweisungssignal gesteuert wird.

3. Gerät zum Schreiben von Informationen auf die Fläche eines für diesen Zweck vorgesehen Trägers (HD) und ihr Lesen mit einem Lese/Schreib-Kopf (MRHD), von einem dafür bestimmten Arm (MA) getragen, um mit einem ersten Motor (CM), in Bezug auf den besagten Träger, in Bewegung gesetzt zu werden, wobei der besagte Träger dafür bestimmten ist, mit einem zweiten Motor (TM) in Bewegung gesetzt zu werden,
**dadurch gekennzeichnet**es Gerät, dass der erste Motor mit einer Steuervorrichtung entsprechend Anspruch 1 gesteuert wird.
